# EUROPEAN PATENT APPLICATION

(11) **EP 4 439 212 A1**
(43) Date of publication of application: **02.10.2024**
(21) Application number: 22897375.6
(22) Date of filing: 28.09.2022
(51) Int. Cl.: G05B 23/02

(54) **VEHICLE STATE REMOTE MONITORING METHOD AND SYSTEM**

(30) Priority: 26.11.2021 CN 202111419592
(71) Applicant: Guangzhou Automobile Group Co. Ltd., Guangzhou, Guangdong 510030 (CN)
(72) Inventor: GUO, Hepan, Guangzhou, Guangdong 511434 (CN); GUO, Jiaqiang, Guangzhou, Guangdong 511434 (CN); SHI, Jingying, Guangzhou, Guangdong 511434 (CN)
(74) Representative: Zaboliene, Reda
(86) International application number: PCT/CN2022/122267
(87) International publication number: WO 2023/093289

(57) **Abstract**

A vehicle state remote monitoring method and system. The method comprises: a kafka module receives CAN data and fault data of a vehicle in real time, and respectively stores the CAN data and the fault data in different kafka topics, wherein both the CAN data and the fault data of the vehicle comprise a vehicle Vin code thereof (S100); a flink module processes the CAN data in the kafka topic in real time, and stores the CAN data in a redis database by using the vehicle Vin code comprised in the CAN data as a key (S200); the flink module processes the fault data in the kafka topic in real time, associates the fault data with the CAN data in the redis database according to the vehicle Vin code comprised in the fault data to obtain associated data, and stores the associated data in the redis database (S300); a Spring Boot module periodically performs vehicle fault analysis on the associated data in the redis database according to a preset first time interval, and sends the fault analysis result to a display device at a monitoring end for display (S400). The real-time requirement of mass data processing of the vehicle can be met.

## Description

The present disclosure claims the priority of the Chinese invention patent application with the invention name "vehicle state remote monitoring method and system" submitted to the China Patent Office on November 26, 2021, application No. 202111419592.7, and the entire content of which is hereby incorporated by reference.

### TECHNICAL FIELD

The present disclosure relates to the field of vehicle state monitoring, and more specifically relates to a vehicle state remote monitoring method and system.

### BACKGROUND

Remote monitoring of vehicle state is mainly realized by real-time acquisition and analysis of vehicle state data, and finally displaying it on a monitoring end. With the development of internet of vehicles and the increasingly mature application of big data, the big data as a strategic asset is increasingly being emphasized by vehicle companies. With the increase of vehicle information sources, the frequency of data acquisition and storage is increasing, which will bring more massive data, traditional data acquisition and storage methods can no longer meet the real-time requirements of vehicle massive data processing.

### SUMMARY

The embodiment of the present disclosure provides a vehicle state remote monitoring method and system, which can meet real-time requirements of massive data processing for the vehicle.

To achieve the above purposes, the embodiment of the present disclosure provides a vehicle state remote monitoring method, the method includes:
a kafka module receiving CAN data and fault data of a vehicle in real time, and respectively storing the CAN data and the fault data in different kafka topics, wherein both the CAN data and the fault data of the vehicle include vehicle Vin code thereof;
a flink module processing the CAN data in the kafka topic in real time, and storing the CAN data in a redis database by using the vehicle Vin code comprised in the CAN data as a key;
the flink module processing the fault data in the kafka topic in real time, associating the fault data with the CAN data in the redis database according to the vehicle Vin code comprised in the fault data to obtain associated data, and storing the associated data in the redis database;
a spring boot module periodically performing vehicle fault analysis on the associated data in the redis database according to a preset first time interval and sending a fault analysis result to a display device at a monitoring end for display.

Preferably, wherein periodically performing vehicle fault analysis on the associated data in the redis database, includes:
extracting the vehicle Vin code, timestamp, and fault codes comprised in associated fault data, sorting the fault codes by the timestamp, and obtaining the CAN data corresponding to time according to the timestamp corresponding to the fault codes, wherein the CAN data corresponding to the time at least comprises vehicle location information corresponding to the time; the fault analysis results at least comprise the vehicle Vin code, fault timestamp, the fault codes and the vehicle location information during fault.

Preferably, the method further includes:
the spring boot module periodically obtaining weather data from multiple cities according to a preset second time interval, and storing the weather data from the multiple cities in the redis database;
the flink module determining the city where the vehicle is located according to the vehicle location information in the CAN data, selecting the weather data of the city where the vehicle is located from the redis database, and combining the weather data of the city where the vehicle is located with the CAN data to obtain combination data, and storing the combination data in the redis database with the vehicle Vin code as the key; and
the flink module associating the fault data with the combination data in the redis database according to the vehicle Vin code comprised in the fault data to obtain the associated data, and storing the associated data in the redis database.

Preferably, wherein the fault analysis results further comprise the weather data of the city where the vehicle is located during the fault; the vehicle location information during the fault comprises latitude and longitude information and city information where the vehicle is located during the fault.

Preferably, the method further includes:
the flink module, while processing the CAN data in the kafka topic in real time, synchronizes storing the CAN data in the hive database and the hbase database in real time;
the flink module, while processing the fault data in the kafka topic in real time, synchronizes storing the fault data in the hive database and the hbase database in real time; and
wherein the CAN data and the fault data stored in the hive database are used for offline analysis, and the CAN data and the fault data stored in the hbase database are used by spring boot for fault tracing or vehicle trajectory query.

Preferably, wherein the spring boot is used for fault tracing, inlcudes:
obtaining the vehicle Vin code of a target vehicle, obtaining historical fault data of the target vehicle in the hbase database according to the vehicle Vin code, extracting the fault codes and their corresponding timestamp in the historical fault data, and obtaining fault traceability information of the target vehicle.

Preferably, wherein the spring boot is used for vehicle trajectory query, inlcudes:
obtaining the vehicle Vin code of the target vehicle, obtaining the historical CAN data of the target vehicle in the hbase database according to the vehicle Vin code, extracting the vehicle location information and its corresponding timestamp from the historical CAN data, and generating vehicle trajectory information of the target vehicle based on the preset map data and the vehicle location information and its corresponding timestamp from the historical CAN data.

The embodiment of the present disclosure further provides a vehicle state remote monitoring system, the system includes a kafka module, a flink module, a redis database and a spring boot module;
the kafka module receives CAN data and fault data of a vehicle in real time, and respectively store the CAN data and the fault data in different kafka topics, wherein both the CAN data and the fault data of the vehicle include vehicle Vin code thereof;
the flink module processes the CAN data in the kafka topic in real time, and stores the CAN data in a redis database by using the vehicle Vin code comprised in the CAN data as a key;
the flink module processes the fault data in the kafka topic in real time, associates the fault data with the CAN data in the redis database according to the vehicle Vin code comprised in the fault data to obtain associated data, and stores the associated data in the redis database;
the spring boot module periodically performs vehicle fault analysis on the associated data in the redis database according to a preset first time interval and sends fault analysis results to a display device at a monitoring end for display.

Preferably, the system further includes a hive database and a hbase database,
the flink module, while processing the CAN data in the kafka topic in real time, synchronizes stores the CAN data in the hive database and the hbase database in real time;
the flink module, while processing the fault data in the kafka topic in real time, synchronizes stores the fault data in the hive database and the hbase database in real time; and
wherein the CAN data and the fault data stored in the hive database are used for offline analysis, and the CAN data and the fault data stored in the hbase database are used by spring boot for fault tracing or vehicle trajectory query.

Preferably, the spring boot is configured to:
obtain the vehicle Vin code of a target vehicle, obtain historical fault data of the target vehicle in the hbase database according to the vehicle Vin code, extract the fault codes and their corresponding timestamp in the historical fault data, and obtain fault traceability information of the target vehicle;
obtain the vehicle Vin code of the target vehicle, obtain the historical CAN data of the target vehicle in the hbase database according to the vehicle Vin code, extract the vehicle location information and its corresponding timestamp from the historical CAN data, and generate vehicle trajectory information of the target vehicle based on the preset map data and the vehicle location information and its corresponding timestamp from the historical CAN data.

The embodiments of the present disclosure have at least the following beneficial effects:

The embodiment of the present disclosure applies a combination of kafka, flink, redis and spring boot to optimize the ability of real-time processing and management of vehicle data, and are able to achieve correlation analysis of the CAN data and the fault data of the vehicle, it can standardize the data processing process and monitoring content of vehicle monitoring, meet the timeliness of vehicle monitoring, and provide great convenience for data collection and subsequent data analysis of vehicle big data.

Other features and advantages of the embodiments of the present disclosure will be explained in the specification.

### BRIEF DESCRIPTION OF THE DRAWINGS

In order to more clearly illustrate the technical solution of the embodiment of the present disclosure or the prior art, the accompanying drawings required in the description of the embodiment or the prior art will be briefly introduced below, obviously, the drawings in the following description are some embodiments of the present disclosure, for those skilled in the art, other drawings can also be obtained from these drawings without any creative work.
FIG. 1 is a schematic diagram of a vehicle state remote monitoring system according to an embodiment of the present disclosure.
FIG. 2 is a schematic diagram of a vehicle state remote monitoring method according to an embodiment of the present disclosure.

### DETAILED DESCRIPTION

Various exemplary embodiments, features, and aspects of the present disclosure will be described in detail below with reference to the accompanying drawings. In addition, numerous specific details are given in the embodiments below to better illustrate the present disclosure. It should be understood by those skilled in the art that the present disclosure is equally implementable without certain specific details. In some examples, the techniques familiar to those skilled in the art have not been described in detail to highlight the main purpose of the present disclosure.

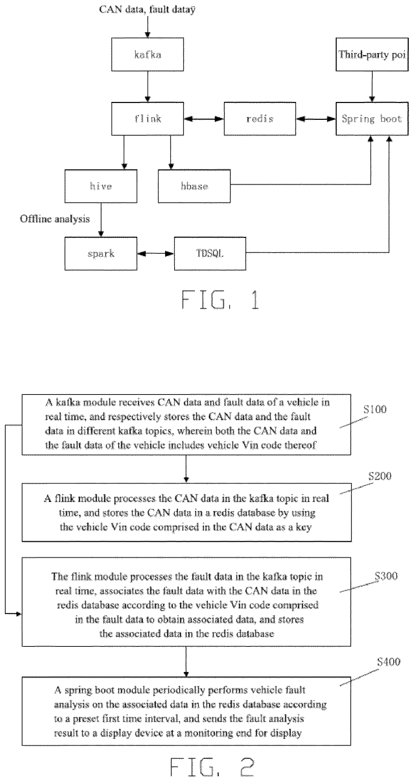

The embodiment of the present disclosure provides a vehicle state remote monitoring method, the method is implemented according to a system framework shown in FIG. 1, the system framework mainly includes a kafka module, a flink module, a redis database, and a spring boot module, etc. Referring to FIG. 2, the method includes the following steps:
At step S100, the kafka module receives CAN data and fault data of a vehicle in real time, and respectively stores the CAN data and the fault data in different kafka topics, wherein both the CAN data and the fault data of the vehicle include vehicle Vin code thereof.

Specifically, the CAN data and the fault data of the vehicle referred to in the steps refer to CAN data and fault data of multiple vehicles of the internet of vehicles, and the CAN data and the fault data of different vehicles are distinguished by the vehicle Vin code they contain as identification. A vehicle terminal collects its own CAN data and fault data in real time and pushes them to the TSP (telematics service provider) platform via its vehicle TBOX. The system framework shown in FIG. 1 can be understood as being built on the TSP platform. Kafka is a high throughput distributed publish subscribe message system, and it is currently the most mature and widely used distributed message queue in the field of big data, the kafka module in the step receives the CAN data and the fault data uploaded by the TBOX of each vehicle in real time, and stores the CAN data and the fault data of each vehicle in different kafka topics according to the data type. and the embodiment of the present disclosure designs two independent topics for storing the CAN data and thefault data.

At step S200, a flink module processes the CAN data in the kafka topic in real time, and stores the CAN data in a redis database by using the vehicle Vin code comprised in the CAN data as a key.

Specifically, when storing the CAN data of a certain vehicle with its vehicle Vin code as the key, the current stored data will overwrite the previous data of the same key, thereby ensuring that only the latest data of the vehicle is always stored in the redis database.

At step S300, the flink module processes the fault data in the kafka topic in real time, associates the fault data with the CAN data in the redis database according to the vehicle Vin code comprised in the fault data to obtain associated data, and stores the associated data in the redis database.

Specifically, the step joins and associates the CAN data and the fault data belonging to the same vehicle for storage based on the vehicle Vin code as a field;, it should be noted that flink stream processing performance is industry-leading and can achieve millisecond level response, compared to real-time stream processing technologies such as spark streaming, it can achieve low latency while maintaining high throughput.

At step S400, a spring boot module periodically performs vehicle fault analysis on the associated data in the redis database according to a preset first time interval, and sends the fault analysis result to a display device at a monitoring end for display.

Specifically, spring boot is currently the mainstream backend development framework for rapid development, particularly suitable for building microservice systems, the first time interval in the embodiment can be set to 5 minutes, and the spring boot module performs vehicle fault analysis on the associated data stored in the redis database every 5 minutes, the vehicle fault analysis is mainly to count failure situation, failure time, failure location of each vehicle in the current cycle, and then generate the failure analysis results sent to a display device of the monitoring end, such as the web page for display. For example, the spring boot module utilizes the websocket communication protocol to actively push the vehicle faults associated with the redis database to the web for display, thereby ensuring timely feedback to the user after faults occur, Users are those who use the monitoring system, such as the R&D personnel of the main engine factory.

The embodiment of the present disclosure use a combination of kafka, flink, redis and spring boot to optimize the ability of real-time processing and management of vehicle data, and are able to achieve correlation analysis of the CAN data and the fault data of the vehicle, at the same time, it can standardize the data processing process and monitoring content of vehicle monitoring, meet the timeliness of vehicle monitoring, and provide great convenience for data collection and subsequent data analysis of vehicle big data.

Specifically, in the embodiment of the present disclosure, the vehicle fault analysis is performed periodically on the associated data in the redis database, includes:
extracting the vehicle Vin code, the timestamp, and the fault codes comprised in the associated fault data, sorting the fault code by timestamp from nearest to far, and obtaining the CAN data corresponding to the time according to the timestamp corresponding to the fault codes, wherein the CAN data corresponding to the time should at least include the vehicle location information corresponding to the time; the final generated fault analysis results at least include the vehicle Vin code, the fault timestamp, the fault codes, the vehicle location information during the fault, and of course, other vehicle state data in the CAN data can be included.

Specifically, the timestamp generated by the fault codes in the embodiment is the time when the vehicle faulted, the fault codes are predetermined, and each fault code represents a type of vehicle fault, it should be noted that the timestamp corresponding to the fault codes, for example, is 10:00 pm, but at the timestamp of 10:00 pm, no CAN data is collected, and there is no CAN data corresponding to 10:00 pm. Therefore, in the embodiment, the CAN data of a sampling time closest to the fault timestamp is selected as the state data of the vehicle at the time of the fault.

In the embodiment of the present disclosure, the method further includes:
At step S500, the spring boot module periodically obtains weather data from multiple cities according to a preset second time interval, and stores the weather data from these cities in the redis database; specifically, the second time interval can be set to 1 hour, meaning that the spring boot module calls a third-party poi every 1 hour to obtain real-time weather conditions of each city and store the real-time weather conditions of each city in the redis database.

In the step S200, the flink module determines the city where the vehicle is located according to the vehicle location information in the CAN data, selects the weather data of the city where the vehicle is located from the redis database, and combines the weather data of the city where the vehicle is located with the CAN data to obtain the combination data, and stores the combination data in the redis database with the vehicle Vin code as the key; specifically, as described above, similarly, when storing the combination data of a vehicle with its vehicle Vin code as the key, the currently deposited data will overwrite the previous data with the same key, thereby ensuring that only the most recent combination data of the vehicle is always stored in the redis database.

In the step S300, the flink module associates the fault data with the combination data in the redis database according to the vehicle Vin code comprised in the fault data to obtain associated data, and stores the associated data in the redis database; specifically, the association between the combination data and the fault data is the same as before, and the association is still based on the vehicle Vin code as a field.

In the embodiment of the present disclosure, the generated fault analysis results further include the weather data of the city where the vehicle is located at the time of the fault; the vehicle location information at the time of the fault includes latitude and longitude information and city information where the vehicle is located at the time of the fault.

In the embodiment of the present disclosure, the method further includes:
In the step S200, the flink module, while processing the CAN data in the kafka topic in real time, also synchronizes the CAN data to be stored in a hive database and a hbase database in real time.

In the step S300, the flink module, while processing the fault data in the kafka topic in real time, also synchronizes the fault data to be stored in the hive database and the hbase database in real time.

The CAN data and the fault data stored in the hive database are used for offline analysis, and the CAN data and the fault data stored in the hbase database are used by spring boot for fault tracing or vehicle trajectory query.

In the present disclosure, the data processed from the flink module will be divided into two links, one link is used by the hive database, the hive database is used to store massive offline CAN bus data and the fault data, which can be used for subsequent statistical analysis, another link is used by the hbase database, the hbase database is mainly used for real-time display and data download services; the hive database and the hbase database are stored differently and can be quickly and easily provided for different data needs.

Furthermore, the statistical analysis data obtained at step S400 may be stored in a TDSQL database.

In the embodiment, the spring boot is used for fault tracing, including:
obtaining the vehicle Vin code of the target vehicle, obtaining the historical fault data of the target vehicle in the hbase database according to the vehicle Vin code, extracting the fault codes and their corresponding timestamps in the historical fault data, and obtaining fault traceability information for the target vehicle.

In the embodiment, the spring boot is used for vehicle trajectory query, including:
obtaining the vehicle Vin code of the target vehicle, obtaining the historical CAN data of the target vehicle in the hbase database according to the vehicle Vin code, extracting the vehicle location information and its corresponding timestamp from the historical CAN data, and generating the vehicle trajectory information of the target vehicle based on the preset map data and the vehicle location information and its corresponding timestamp from the historical CAN data.

For example, by clicking and locating on a map, the vehicle locations are marked in chronological order on the map, and connected in chronological order to obtain a vehicle trajectory.

The embodiment of the present disclosure has the following advantages:
(1) The embodiment of the present disclosure may utilize redis database as an association middleware, which makes associating data fast as the data is in memory;
(2) Compared with the original data association, the embodiment of the present disclosure has only one piece of latest data for each vehicle, and the amount of data to be queried when associating is greatly reduced, the speed is greatly improved, the processing delay is reduced, and the real-time nature of the monitoring is ensured;
(3) The embodiment of the present disclosure realizes multiple use of data and saves resources, and the data of the redis association middleware can be used as the data source of real-time vehicle monitoring;
(4) In the embodiment of the present disclosure, the CAN data stream, the fault data stream, and the external weather data are processed in parallel, without mutual interference and reducing latency.

As shown in FIG. 1, the embodiment of the present disclosure further provides a vehicle state remote monitoring system, the system includes a kafka module, a flink module, a redis database, and a spring boot module, which can be used to implement the steps of the above method;

The kafka module is used to receive CAN data and fault data of a vehicle in real time, and respectively store the CAN data and the fault data in different kafka topics, wherein both the CAN data and the fault data of the vehicle include vehicle Vin code thereof.

The flink module is used to process the CAN data in the kafka topic in real time, and store the CAN data in a redis database by using the vehicle Vin code comprised in the CAN data as a key.

The flink module is used to process the fault data in the kafka topic in real time, associate the fault data with the CAN data in the redis database according to the vehicle Vin code comprised in the fault data to obtain associated data, and store the associated data in the redis database.

The spring boot module is used to periodically perform vehicle fault analysis on the associated data in the redis database according to a preset first time interval, and send the fault analysis result to a display device at a monitoring end for display
In the embodiment, the system further includes a hive database and a hbase database;
The flink module, while processing the CAN data in the kafka topic in real time, also synchronizes the CAN data to be stored in the hive database and the hbase database in real time.

The flink module, while processing the fault data in the kafka topic in real time, also synchronizes the fault data to be stored in the hive database and the hbase database in real time.

The CAN data and the fault data stored in the hive database are used for offline analysis, and the CAN data and the fault data stored in the hbase database are used by spring boot for fault tracing or vehicle trajectory query.

In the embodiment, the spring boot module is further used to:
obtain the vehicle Vin code of the target vehicle, obtaining the historical fault data of the target vehicle in the hbase database according to the vehicle Vin code, extract the fault codes and their corresponding timestamps in the historical fault data, and obtain fault traceability information for the target vehicle.
obtain the vehicle Vin code of the target vehicle, obtain the historical CAN data of the target vehicle in the hbase database according to the vehicle Vin code, extract the vehicle location information and its corresponding timestamp from the historical CAN data, and generate the vehicle trajectory information of the target vehicle based on the preset map data and the vehicle location information and its corresponding timestamp from the historical CAN data.

It should be noted that the method of the above embodiment corresponds to the system of the above embodiment. Therefore, the parts of the system that are not detailed in the above embodiment can be obtained by referring to the content of the method of the above embodiment and will not be repeated here.

The above has described various embodiments of the present disclosure, and the above explanation is exemplary, not exhaustive, and is not limited to the disclosed embodiments. Without deviating from the scope and spirit of the various embodiments explained, many modifications and changes are obvious to ordinary technical personnel in this field. The selection of terms used in this article aims to best explain the principles, practical applications, or technological improvements in the market of each embodiment, or to enable other ordinary technical personnel in the art to understand the disclosed embodiments in this article.

## Claims

1. A vehicle state remote monitoring method comprising:
a kafka module receiving CAN data and fault data of a vehicle in real time, and respectively storing the CAN data and the fault data in different kafka topics, wherein both the CAN data and the fault data of the vehicle include vehicle Vin code thereof;
a flink module processing the CAN data in the kafka topic in real time, and storing the CAN data in a redis database by using the vehicle Vin code comprised in the CAN data as a key;
the flink module processing the fault data in the kafka topic in real time, associating the fault data with the CAN data in the redis database according to the vehicle Vin code comprised in the fault data to obtain associated data, and storing the associated data in the redis database;
a spring boot module periodically performing vehicle fault analysis on the associated data in the redis database according to a preset first time interval and sending fault analysis results to a display device at a monitoring end for display.

2. The method according to claim 1, wherein periodically performing vehicle fault analysis on the associated data in the redis database, comprises:
extracting the vehicle Vin code, timestamp, and fault codes comprised in associated fault data, sorting the fault codes by the timestamp, and obtaining the CAN data corresponding to time according to the timestamp corresponding to the fault codes, wherein the CAN data corresponding to the time at least comprises vehicle location information corresponding to the time; the fault analysis results at least comprise the vehicle Vin code, fault timestamp, the fault codes and the vehicle location information during fault.

3. The method according to claim 2, further comprising:
the spring boot module periodically obtaining weather data from multiple cities according to a preset second time interval, and storing the weather data from the multiple cities in the redis database;
the flink module determining the city where the vehicle is located according to the vehicle location information in the CAN data, selecting the weather data of the city where the vehicle is located from the redis database, and combining the weather data of the city where the vehicle is located with the CAN data to obtain combination data, and storing the combination data in the redis database with the vehicle Vin code as the key; and
the flink module associating the fault data with the combination data in the redis database according to the vehicle Vin code comprised in the fault data to obtain the associated data, and storing the associated data in the redis database.

4. The method according to claim 3, wherein the fault analysis results further comprise the weather data of the city where the vehicle is located during the fault; the vehicle location information during the fault comprises latitude and longitude information and city information where the vehicle is located during the fault.

5. The method according to any one of claims 1-4, further comprising:
the flink module, while processing the CAN data in the kafka topic in real time, synchronizes storing the CAN data in the hive database and the hbase database in real time;
the flink module, while processing the fault data in the kafka topic in real time, synchronizes storing the fault data in the hive database and the hbase database in real time; and
wherein the CAN data and the fault data stored in the hive database are used for offline analysis, and the CAN data and the fault data stored in the hbase database are configured by spring boot for fault tracing or vehicle trajectory query.

6. The method according to claim 5, wherein spring boot is configured for fault tracing, comprises:
obtaining the vehicle Vin code of a target vehicle, obtaining historical fault data of the target vehicle in the hbase database according to the vehicle Vin code, extracting the fault codes and their corresponding timestamp in the historical fault data, and obtaining fault traceability information of the target vehicle.

7. The method according to claim 5, wherein spring boot is configured for vehicle trajectory query, comprises:
obtaining the vehicle Vin code of the target vehicle, obtaining the historical CAN data of the target vehicle in the hbase database according to the vehicle Vin code, extracting the vehicle location information and its corresponding timestamp from the historical CAN data, and generating vehicle trajectory information of the target vehicle based on the preset map data and the vehicle location information and its corresponding timestamp from the historical CAN data.

8. A vehicle state remote monitoring system comprising a kafka module, a flink module, a redis database and a spring boot module;
the kafka module receiving CAN data and fault data of a vehicle in real time, and respectively storing the CAN data and the fault data in different kafka topics, wherein both the CAN data and the fault data of the vehicle include vehicle Vin code thereof;
the flink module processing the CAN data in the kafka topic in real time, and storing the CAN data in a redis database by using the vehicle Vin code comprised in the CAN data as a key;
the flink module processing the fault data in the kafka topic in real time, associating the fault data with the CAN data in the redis database according to the vehicle Vin code comprised in the fault data to obtain associated data, and storing the associated data in the redis database;
the spring boot module periodically performing vehicle fault analysis on the associated data in the redis database according to a preset first time interval and sending fault analysis results to a display device at a monitoring end for display.

9. The system according to claim 8, further comprising a hive database and a hbase database,
the flink module, while processing the CAN data in the kafka topic in real time, synchronizes storing the CAN data in the hive database and the hbase database in real time;
the flink module, while processing the fault data in the kafka topic in real time, synchronizes storing the fault data in the hive database and the hbase database in real time; and
wherein the CAN data and the fault data stored in the hive database are used for offline analysis, and the CAN data and the fault data stored in the hbase database are used by spring boot for fault tracing or vehicle trajectory query.

10. The system according to claim 8, wherein the spring boot is configured to:
obtain the vehicle Vin code of a target vehicle, obtain historical fault data of the target vehicle in the hbase database according to the vehicle Vin code, extract the fault codes and their corresponding timestamp in the historical fault data, and obtain fault traceability information of the target vehicle;
obtain the vehicle Vin code of the target vehicle, obtain the historical CAN data of the target vehicle in the hbase database according to the vehicle Vin code, extract the vehicle location information and its corresponding timestamp from the historical CAN data, and generate vehicle trajectory information of the target vehicle based on the preset map data and the vehicle location information and its corresponding timestamp from the historical CAN data.
